# EUROPÄISCHE PATENTANMELDUNG

(11) **EP 2 230 354 A1**
(43) Veröffentlichungstag der Anmeldung: **22.09.2010**
(21) Anmeldenummer: 10152354.6
(22) Anmeldetag: 02.02.2010
(51) Int. Cl.: D21F 3/08, D21G 1/02, B65H 81/00

(54) **Walze für eine Papiermaschine**

(30) Priorität: 19.03.2009 DE 102009001648
(71) Anmelder: Voith Patent GmbH, 89522 Heidenheim (DE)
(72) Erfinder: Aufrecht, Harald, 73434 Aalen (DE); Speidel, Phillip, 89522 Heidenheim (DE)

(57) **Zusammenfassung**

Die Erfindung betrifft eine Walze (1), insbesondere für eine Maschine zur Herstellung und/oder Behandlung einer Faserstoffbahn, mit einem Walzenkern (2) mit zylindrischer Mantelfläche (3) und einem gewickelten Belag (4), der aus einem wendelförmig um die Mantelfläche (3) des Kerns (2) gewickelten Profilband (5) gebildet ist, wobei die beiden Enden (7) des Profilbands jeweils durch eine Stirnseite (8) begrenzt sind und der gewickelte Belag (4) zwei axiale Endbereiche (9) hat, die jeweils aus mehreren Windungen (6) des Profilbands (5) gebildet sind und an die sich in axialer Richtung (A-A) der Walze (1) betrachtet jeweils ein am Walzenkern (2) befestigter Endring (10) anschließt, mit jeweils einer Stirnseite (11), die eine Anlageseite (12) bereitstellt, welche zur Anlageseite (12) des gegenüberliegenden Endrings (10) weist und entlang der die unmittelbar an den Endring (10) angrenzende Windung (6a) des jeweiligen Endbereichs (10) des Belags (4) zumindest abschnittweise ihrer Länge nach zur Anlage gebracht ist.

Die Erfindung ist dadurch gekennzeichnet, dass in zumindest einem axialen Endbereich (9) des gewickelten Belags (4) das Profilband (5) bis zu seinem Ende (7) in Windungen (6, 6a) mit konstanter Steigung gewickelt ist, wobei die unmittelbar an den Endring (10) angrenzende Windung (6a) auf deren gesamten Länge mit der Anlageseite (12) in Kontakt ist und die Stirnseite (11) des Endrings (10) eine schräg, insbesondere quer zur Anlagefläche (12) orientierte Stufe (13) bildet, an der das Ende (7) des Profilbands (5) mit seiner Stirnseite (8) stumpf anstößt.

## Beschreibung

Die Erfindung betrifft eine Walze insbesondere für eine Maschine zur Herstellung und/oder Behandlung einer Faserstoffbahn nach dem Oberbegriff des Patentanspruchs 1.

Papiermaschinenwalzen mit wendelförmig gewickelten Belägen sind aus dem Stand der Technik bekannt.

So beschreibt bspw. die DE 10 2006 053 504 eine solche Papiermaschinenwalze. Bei den bekannten Walzen der oben genannten Art stellt die Korrosion eines der größten Problemfelder dar. So tritt bei diesen Walzen bspw. im Bereich der beiden Endringe, besser im Bereich des Übergangs zwischen den Endringen und dem gewickelten Belag vermehrt Korrosion auf.

Dies liegt bspw. daran, dass im Bereich der beiden axialen Enden des gewickelten Belags oftmals keine exakte geometrische Konstanz der Konturen und der Wickelgeometrie vorliegt.

Der Grund hierfür ist, dass bei den bisher bekannten Papiermaschinenwalzen mit gewickeltem Belag, das Ende des Belags umgebogen und in eine dafür vorgesehene Nut des jeweils zugeordneten Endrings eingelegt wird. Dies führt zu einer Wulstbildung des Profilbands an der Umbiegestelle und zu Unstetigkeiten in der Wickelgeometrie im Bereich der axialen Enden des gewickelten Belags. Hierdurch kann es im Bereich der axialen Enden des gewickelten Belags zu Undichtigkeit und daraus folgend zum Eindringen von Feuchtigkeit in diesen Bereich kommen. Daraus resultierend kann es in diesem Bereich zu Unterrostung des Belags kommen, was zu einem vorzeitigen Versagen einer solchen Walze führen kann.

Es ist die Aufgabe der vorliegenden Erfindung eine Walze der eingangs genannten Art so weiterzubilden, dass die oben beschriebenen Korrosionsprobleme nicht oder zumindest stark vermindert auftreten.

Die Aufgabe wird gelöst durch eine Walze, insbesondere für eine Maschine zur Herstellung und/oder Behandlung einer Faserstoffbahn, mit einem Walzenkern mit zylindrischer Mantelfläche und einem gewickelten Belag, der aus einem wendelförmig um die Mantelfläche des Kerns gewickelten Profilband gebildet ist. Bei der gattungsgemäßen Walze sind die beiden Enden des Profilbands jeweils durch eine Stirnseite begrenzt. Ferner hat der gewickelte Belag zwei axiale Endbereiche, die jeweils aus mehreren Windungen des Profilbands gebildet sind. Bei einer gattungsgemäßen Walze schließt sich an jeden axialen Endbereich des Belags in axialer Richtung der Walze betrachtet, jeweils ein am Walzenkern befestigter Endring an. Hierbei hat jeder Endring eine Stirnseite, die eine Anlageseite bereitstellt, welche zur Anlageseite des gegenüberliegenden Endrings weist und entlang der die unmittelbar an den Endring angrenzende Windung des jeweiligen Endbereichs des Belags zumindest abschnittweise ihrer Länge nach zur Anlage gebracht ist.

Die erfindungsgemäße Walze ist **dadurch gekennzeichnet, dass** in zumindest einem axialen Endbereich des gewickelten Belags das Profilband bis zu seinem Ende in Windungen mit konstanter Steigung gewickelt ist, wobei die unmittelbar an den Endring angrenzende Windung auf deren gesamten Länge mit der Anlageseite in Kontakt ist und die Stirnseite des Endrings eine schräg, insbesondere quer, zur Anlagefläche orientierte Stufe bildet, an der das Ende des Profilbands mit seiner Stirnseite stumpf anstößt.

Unter der Stirnseite des Profilbands ist dessen Vorder- oder Rückseite zu verstehen, in Abgrenzung zu dessen beiden Längsseiten, die sich in Längsrichtung des Profilbands erstrecken. Die Stirnseiten erstrecken sich hierbei in der Regel senkrecht zu den Längsseiten des Profilbands. Die beiden Stirnseiten begrenzen somit das Profilband in seiner Länge.

Bei der erfindungsgemäßen Lösung ist in zumindest einem axialen Endbereich des gewickelten Belags das Profilband bis zu seinem Ende in Windungen mit konstanter Steigung, d.h. in parallel zueinander verlaufenden Windungen, gewickelt. Hieraus folgt, dass das Profilband im Bereich seines Endes in axialer Richtung der Walze nicht umgebogen ist, was beim Stand der Technik der Fall ist, um das Ende des Profilbands an dem zugeordneten Endring zu befestigen. Hierdurch werden unregelmäßigkeiten in der Wickelgeometrie im Bereich der Windungen des Belags im axialen Endbereich des Belags vermieden.

Bei der erfindungsgemäßen Walze endet ferner die Stirnseite des Endes des Profilbands in einer stumpfen Stoßstelle an der an der Stirnseite des Endrings gebildeten Stufe. Dadurch kann das in dem axialen Endbereich des Belags vollständig, d.h. bis zu seinem Ende, parallel gewickelte Profilband an der gesamten Umfangslänge der Anlageseite des Endrings zur Anlage gebracht und mit dem Endring verbunden werden.

Hierdurch wird eine Walze mit gewickeltem Belag zur Verfügung gestellt, bei welcher der gewickelte Belag im Bereich seines axialen keinen Wickelfehler hat und der Übergang zwischen dem axialen Ende des Belags und dem Endring im Bereich des Walzenkerns korrosionsdicht gestaltet werden kann. Durch die erfindungsgemäße Lösung wird also eine Walze vorgeschlagen, die eine gegenüber einer aus dem Stand der Technik bekannten Walze eine geringere Neigung zur Unterrostung hat.

Vorteilhafte Ausgestaltungen und Weiterbildungen der Erfindung sind in den Unteransprüchen angegeben.

Vorzugsweise ist einer der Endringe einstückig ausgebildet, bevorzugt sind beide Endringe einstückig ausgebildet. Die Endringe erstrecken sich vorzugsweise in radialer Richtung der Walze betrachtet gleich hoch wie der gewickeltet Belag, so dass im Ergebnis - zumindest im Übergangsbereich zwischen gewickelten Belag und Endring - die Außenseite des gewickelten Belags bündig zu der Außenseite des jeweils zugeordneten Endrings ist. Eine oder beide Endringe können ferner in deren Umfangrichtung betrachtet geschlossen oder offen ausgebildet sein. Im letzt genannten Fall kann bzw. können der bzw. die Endring(e) einen sich im wesentlichen in axialer und radialer Richtung der Walze erstreckenden Schlitz haben, wobei der Schlitz den jeweiligen Endring in radialer Richtung vollständig durchsetzt.

Die Mantelfläche des Walzenkerns kann ferner in dem Bereich in dem ein Endring aufgezogen ist bzw. aufgezogen werden soll, eine Stufe ausbilden, die in axialer Richtung der Walze betrachtet einen Anschlag für den Endring bildet, wodurch festgelegt wird, wie weit in axialer Richtung der Walze betrachtet der Endring über den Walzenkern geführt werden kann. In diesem Fall kann der Walzenkern in dem Bereich in dem der Endring aufgezogen ist oder aufgezogen werden soll, zumindest abschnittweise einen kleineren Radius haben als in dem Bereich der Mantelfläche in dem das Profilband zur Ausbildung des gewickelten Belags gewickelt ist.

Ferner kann zumindest ein Endring mittels eines Befestigungselements an dem Walzenkern befestigt sein, welches eine radiale Krafteinwirkung und eine axiale Krafteinwirkung auf den Befestigungsring ausübt. Hierbei kann die axiale Krafteinwirkung insbesondere in Richtung des gewickelten Belags gerichtet sein, so dass der Endring zumindest eine axiale Kraft auf den gewickelten Belag aufbringt, wodurch dieser verspannt wird.

Hierzu kann das Befestigungselement bspw. einen sich in radialer Richtung der Walze von außen nach innen konisch verjüngenden Kopf umfassen der mit einer am Endring angeordneten und sich ebenfalls in radialer Richtung der Walze von außen nach innen konisch verjüngenden Wirkfläche in Wirkverbindung steht. Konkret kann das Befestigungselement bspw. als Schraube mit einem sich konisch verjüngenden Kopf ausgebildet sein und die Wirkfläche Teil der Wandung einer den Endring in radialer Richtung durchsetzenden Bohrung sein.

Vorzugsweise ist das Profilband auf seiner gesamten Länge, d.h. von seinem einen Ende bis zu seinem anderen Ende, in Windungen mit konstanter Steigung gewickelt. Mit anderen Worten bedeutet dies, dass das Profilband auf seiner gesamten Länge Windungen bildet, die alle eine konstante Steigung haben. Hierdurch wird jegliche Art von Wulstbildung im Belag und Fehler in der Wickelgeometrie des Belags vermieden.

Vorzugsweise sind hierbei die jeweils zueinander benachbarten Windungen jeweils auf deren gesamten Länge miteinander in Kontakt gebracht. Durch die einander berührenden Windungen kann ferner das Abdichten des Belags gegenüber dem Walzenkern verbessert werden.

Im Hinblick auf die Korrosion des Belags besteht ferner oftmals die Problematik, dass am Beginn und am Ende des Wickelprozesses nicht die notwendigen Zugkräfte auf das Profilband aufgebracht werden können, was zur Folge hat, dass an den beiden axialen Enden des Belags kein hinreichend guter Reibschluss zwischen Belag und Walzenkern und somit keine hinreichend gute Verbindung zwischen Belag und Walzenkern erzeugt werden kann, was im Bereich der axialen Enden des Belags zu Undichtigkeiten zwischen Belag und Walzenkern und daher zu Unterrostung führen kann.

Vorzugsweise ist deshalb zumindest ein Endring im Bereich seiner Stirnseite zumindest abschnittweise mit der Mantelfläche des Walzenkerns verschweißt. Konkret ist es von Vorteil, wenn die beiden Endringe im Bereich ihrer Stirnseite zumindest abschnittweise mit der Mantelfläche des Walzenkerns verschweißt sind.

Des Weiteren ist es von Vorteil, wenn das Profilband in dem zumindest einen axialen Endbereich des Belags zumindest mit der unmittelbar an den Endring angrenzenden Windung mit der Mantelfläche des Walzenkerns zumindest abschnittweise verschweißt ist.

Vorzugsweise ist in diesem Zusammenhang das Profilband in beiden Endbereichen des Belags zumindest mit der jeweils unmittelbar an den jeweiligen Endring angrenzenden Windung mit der Mantelfläche des Walzenkerns zumindest abschnittweise verschweißt.

Ferner ist es für eine gute Verbindung des gewickelten Belags mit dem Walzenkern von Vorteil, wenn das Profilband von seinem einen Ende bis zu seinem anderen Ende, insbesondere jede Windung des Belags, mit der Mantelfläche des Walzenkerns zumindest abschnittweise verschweißt ist.

Bei allen oben genannten Schweißverbindungen kann sich die Verscheißung des Profilbands mit dem Walzenkern im Kontaktbereich zwischen Profilband und Mantelfläche des Walzenkerns unterbrochen oder ununterbrochen erstrecken.

Ist das Profilband wie oben erläutert zumindest abschnittweise mit dem Walzenkern durch eine Schweißverbindung verbunden, so kann es möglich sein, dass das Profilband ohne Zugspannung um die Mantelfläche des Walzenkerns gewickelt ist. In diesem Fall liegt das Profilband im Wesentlichen ohne Zugspannung auf der Mantelfläche des Walzenkerns auf. Durch das Fehlen der Zugspannung wird der Walzenkern nicht eingeschnürt, d.h. der Walzenkern bleibt beim Wickelprozess unverformt u. unverändert und erfährt somit keine Dimensionsänderung.

Die Verbindung zur Kraftübertragung zwischen dem gewickelten Profilband und dem jeweils zugeordneten Endring kann vorzugsweise über Haltestifte und/oder Verscheißen erfolgen.

Eine bevorzugte Ausgestaltung der Erfindung sieht daher bspw. vor, dass bei dem zumindest einen axialen Ende des Belags das Profilband im Bereich seiner unmittelbar an den Endring angrenzenden Windung mit dem Endring verbunden ist durch einen oder mehrere Haltestift(e). Vorzugsweise ist der zumindest eine Haltestift unmittelbar benachbart zur Stufe angeordnet.

Eine dazu alternative oder zusätzliche Ausgestaltung der Erfindung sieht vor, dass bei zumindest einem axialen Ende des gewickelten Belags, der diesem Ende zugeordnete Endring und das Profilband im Bereich seiner unmittelbar an den Endring angrenzenden Windung durch eine Schweißverbindung miteinander verbunden sind.

Nach einer konkreten Ausführungsform wird die Anlageseite durch die Wickelrichtung des Profilbandes und die radiale Richtung der Walze aufgespannt.

Ferner ist es denkbar, dass die Stufe im Wesentlichen durch die axiale und die radiale Richtung der Walze aufgespannt wird.

Eine Konkrete Ausgestaltung der Erfindung sieht vor, dass die Stirnseite des Endrings durch die Anlageseite und die Stufe gebildet ist, wobei sich die Anlageseite in Wickelrichtung des Bandes im Wesentlichen über einen Umlauf erstreckt und der Anfang und das Ende der Anlageseite durch die Stufe miteinander verbunden sind. Mit anderen Worten gibt die Stirnseite des bzw. der Endring(e) eine eingängige Helix vor, wobei die Steigung der Anlagefläche des einen Endrings den Beginn für die Windungen des gewickelten Belags und die Steigung der Anlagefläche des anderen Endrings das Ende der Windungen des Belags vorgibt. Die Stirnseite des bzw. der Endring(e) kann bspw. mittels eines Zirkularfräsvorgangs gefertigt werden.

Des Weiteren ist die Höhe der Stufe, betrachtet in axialer Richtung der Walze, vorzugsweise gleich der Breite des Profilbandes.

Die Wickelrichtung kann hierbei links- oder rechtsgängig sein.

Eine konkrete Ausgestaltung der Erfindung sieht ferner vor, dass das Profilband in radialer Richtung der Walze betrachtet einen radial innen liegenden ersten Abschnitt und einen radial außen liegenden die Außenseite des Belags bereitstellenden zweiten Abschnitt hat, wobei die ersten Abschnitte benachbarter Windungen miteinander in Kontakt sind und wobei zwischen zweiten Abschnitten benachbarter Windungen eine Nut gebildet ist. Vorzugsweise erstreckt sich die Nut wendelförmig von dem einen zum anderen axialen Ende des Profilbands.

### Die Erfindung wird anhand schematischer Zeichnungen weiter erläutert. Es zeigen

- Figur 1: eine erfindungsgemäße Papiermaschinenwalze in Draufsicht,
- Figur 2: die Papiermaschinenwalze der Figur 1 im Längsschnitt,
- Figur 3: eine Teilansicht einer erfindungsgemäßen Papiermaschinenwalze in einem weiteren Längsschnitt.

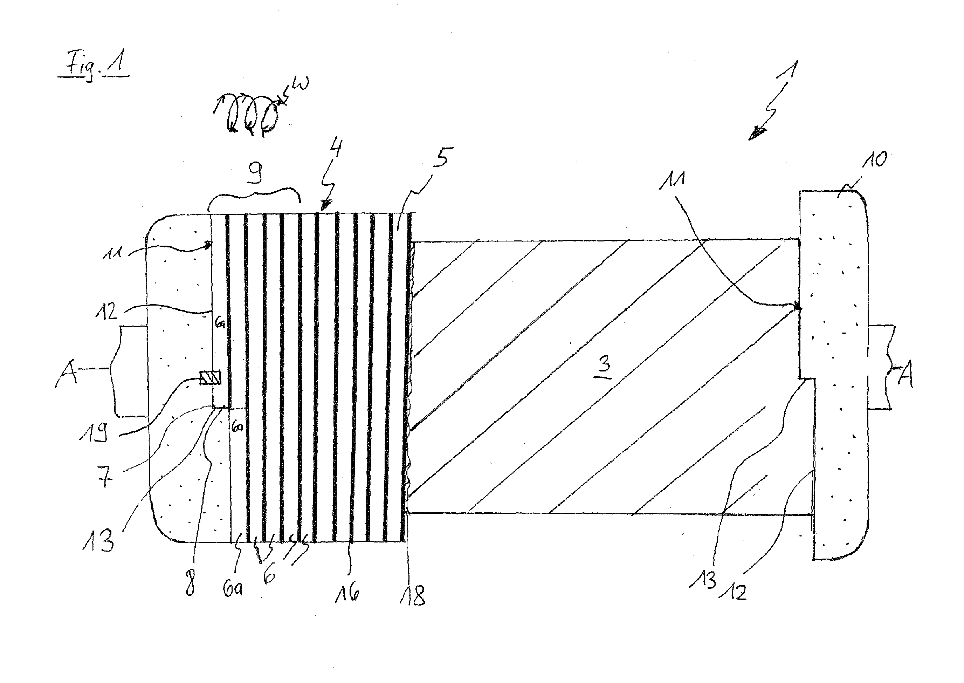

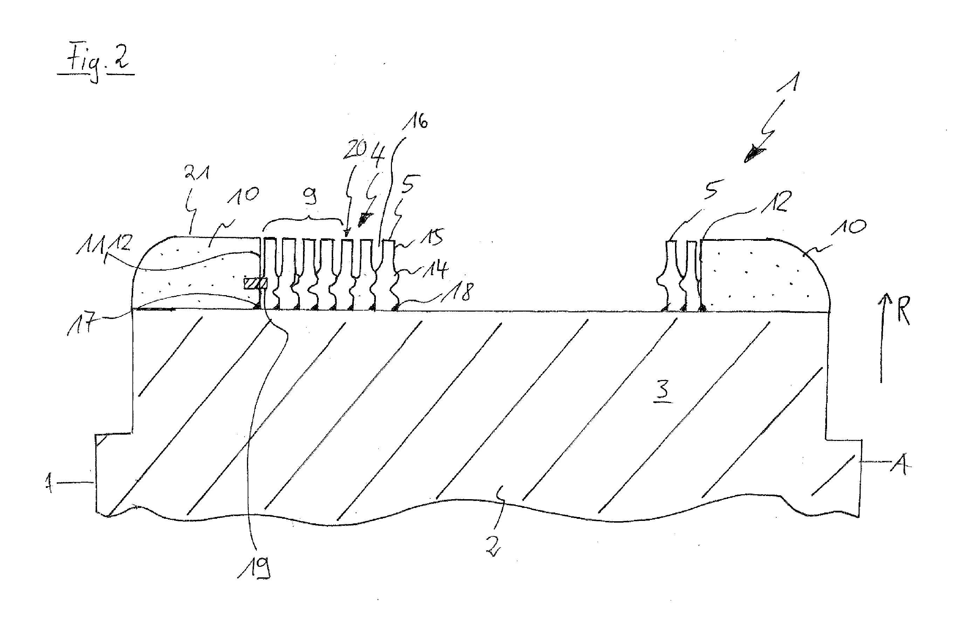

Die Figur 1 zeigt eine erfindungsgemäße Papiermaschinenwalze 1 in Draufsicht. Die Figur 2 zeigt die Papiermaschinenwalze 1 im Längsschnitt.

Die Walze 1 hat einen Walzenkern 2 mit einer kreiszylindrischen Mantelfläche 3 um den zur Ausbildung eines gewickelten Belags 4 ein Profilband 5 in einer Vielzahl von Windungen wendelförmig gewickelt ist.

Zur Vereinfachung der Darstellung ist der gewickelte Belag nur teilweise, d.h. in einem axialen Endbereich und etwas darüber hinaus, gezeigt.

Das Profilband hat zwei Enden, von denen vorliegend nur das eine Ende 7 zu sehen ist. Jedes Ende ides Profilbands ist durch eine sich quer zur Längserstreckung des Profilbands 5 verlaufende Stirnseite 8 begrenzt. Im Ergebnis wird also das Profilband 5 in seiner Länge durch die beiden Stirnseiten begrenzt.

Der gewickelte Belag 4 hat zwei axiale Endbereiche 9, von denen vorliegend - der Übersichtlichkeit halber - nur einer zu erkennen ist. Jeder axiale Endbereich des gewickelten Belags 4 wird aus mehreren Windungen 6 -vorliegend sind es bspw. 4 Windungen - des Profilbands 5 gebildet. An den axialen Endbereich 9 des gewickelten Belags 4 schließt sich in axialer Richtung A-A der Walze 1 betrachtet jeweils ein am Walzenkern 2 befestigter und insbesondere einstückig ausgebildeter Endring 10 an. Der Endring 10 hat eine Stirnseite 11, die eine Anlageseite 12 bereitstellt, welche zur Anlageseite 12 des gegenüberliegenden Endrings 10 weist.

Vorliegend ist das Profilband 5 im Uhrzeigersinn gewickelt und bildet daher eine rechtsgängige Wendel aus.

Die jeweilige Anlageseite 12 wird vorliegend durch die Wickelrichtung W des Profilbandes 5 und durch die radiale Richtung der Walze 1 aufgespannt. Ferner wird die Stufe 13 durch die axiale Richtung A-A der Walze 1 und durch deren radiale Richtung R aufgespannt wird.

Eine Konkrete Ausgestaltung der Erfindung sieht vor, dass die Stirnseite 11 des Endrings 10 durch die Anlageseite 12 und die Stufe 13 gebildet ist, wobei sich die Anlageseite 12 in Wickelrichtung W des Bandes 5 im Wesentlichen über einen Umlauf erstreckt und der Anfang und das Ende der Anlageseite 12 durch die Stufe 13 miteinander verbunden sind.

Des Weiteren ist die Höhe der Stufe 13 gleich der Breite des Profilbands 5.

Wie aus der Figur 1 zu entnehmen ist, ist in dem axialen Endbereich 9 des gewickelten Belags 4 das Profilband 5 bis zu seinem Ende in Windungen 6, 6a mit konstanter Steigung gewickelt, wobei die unmittelbar an den Endring 10 angrenzende Windung 6a auf deren gesamten Länge mit der Anlageseite 12 des Endrings 10 in Kontakt ist. Die Stirnseite 11 des Endrings hat ferner eine quer zur Anlagefläche 12 orientierte Stufe 13, an der das Ende 7 des Profilbands 5 mit seiner Stirnseite 8 stumpf anstößt. Das Profilband 5 erstreckt sich hierbei insbesondere in einem Stück von der Stirnseite des einen Endrings zur Stirnseite des anderen Endrings.

Wie den Darstellungen der Figuren 1 und 2 zu entnehmen ist, erstrecken sich die Endringe 10 zumindest im Bereich des Übergangs von Endring 10 zu gewickeltem Belag 4 in radialer Richtung der Walze 1 betrachtet gleich hoch wie der gewickelte Belag 4, so dass im Ergebnis die Außenseite 20 des gewickelten Belags bündig zu der Außenseite 21 des jeweils zugeordneten Endrings 10 ist.

Das Profilband 5 hat in radialer Richtung der Walze 1 betrachtet einen radial innen liegenden ersten Abschnitt 14 und einen radial außen liegenden die Außenseite 20 des Belags 4 bereitstellenden zweiten Abschnitt 15, wobei die ersten Abschnitte benachbarter Windungen miteinander in Kontakt gebracht sind und wobei zwischen zweiten Abschnitten benachbarter Windungen eine Nut 16 gebildet ist, die sich vorzugsweise wendelförmig von dem einen Ende 7 zum anderen axialen Ende des Profilbands 5 erstreckt.

Vorzugsweise ist das Profilband 5 auf seiner gesamten Länge, d.h. von seinem einen Ende 7 bis zu seinem anderen Ende, in Windungen mit konstanter Steigung gewickelt.

Wie aus den Figuren 1 und 2 zu erkennen ist, sind die jeweils zueinander benachbarten Windungen 6, 6a jeweils auf deren gesamten Länge miteinander in Kontakt gebracht. Dies wird dadurch erreicht, indem die Ganghöhe des zu dem Belag 4 gewickelten Profilbands 5 gleich der Breite des Profilbands 5 ist.

Wie aus der Darstellung der Figur 2 zu erkennen ist, sind die Endringe 10 im Bereich ihrer Stirnseite 11 zumindest abschnittweise mit der Mantelfläche 3 des Walzenkerns 2 durch eine Schweißverbindung 17 verbunden. Ferner ist das Profilband 5 vorliegend auf seiner gesamten Länge im Kontaktbereich mit der Mantelfläche 3 des Walzenkerns 2 mit dem Walzenkern 2 durch eine in Wickelrichtung ununterbrochen umlaufende Schweißnaht 18 verbunden. Die Schweißnaht 18 ist hierbei während des Wickelvorgangs erzeugt worden.

In dem axialen Ende 9 des Belags 4 ist das Profilband im Bereich seiner unmittelbar an den Endring 10 angrenzenden Windung 6a mit dem Endring 10 verbunden durch einen Haltestift 19, der in eine Bohrung in der Stirnseite 13 des Endrings 10 sowie in eine Bohrung im Bereich des Endes 7 des Profilbands 5 eingesetzt ist.

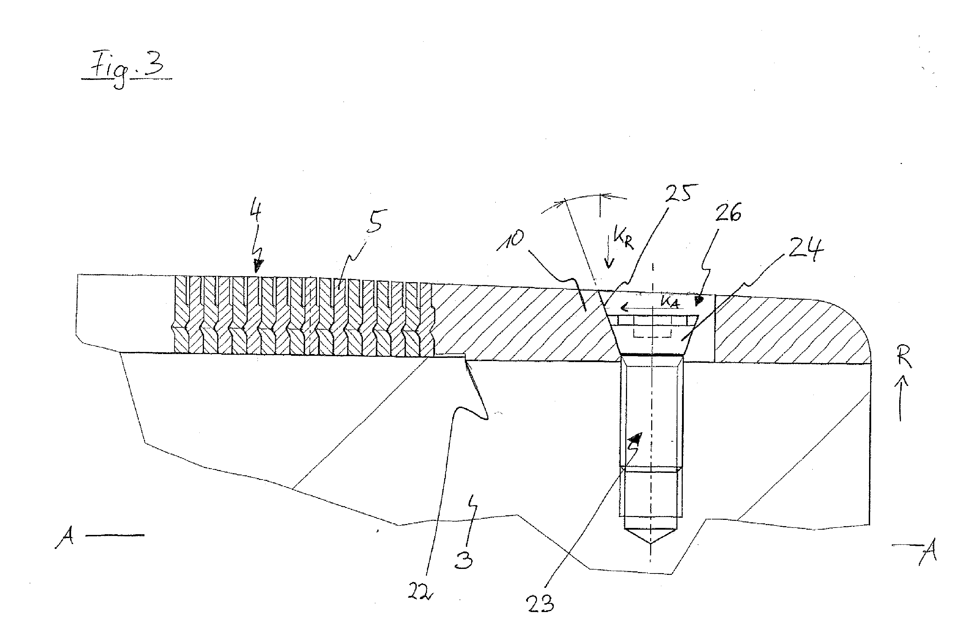

Die Figur 3 zeigt eine Teilansicht der erfindungsgemäßen Papiermaschinenwalze in einem weiteren Längsschnitt, der gegenüber dem Längsschnitt der Figur 2 in Umfangrichtung der Walze 1 versetzt angeordnet ist.

Die Mantelfläche 3 des Walzenkerns bildet - und dies ist ein optionales Merkmal, welches in der Darstellung der Figur 2 nicht dargestellt ist- in dem Bereich in dem der Endring 10 aufgezogen ist eine Stufe 22 aus, die in axialer Richtung A-A der Walze 1 betrachtet einen Anschlag für den Endring 10 bildet. In diesem Fall hat der Walzenkern 2 in dem Bereich in dem der Endring 10 aufgezogen ist abschnittweise einen kleineren Radius als in dem Bereich der Mantelfläche 3 in dem das Profilband 5 zur Ausbildung des gewickelten Belags 4 gewickelt ist.

Wie aus der Darstellung der Figur 3 zu entnehmen ist, kann der Endring 10 mittels eines als Schraube 23 ausgebildeten Befestigungselements an dem Walzenkern 2 befestigt sein, wobei das Befestigungselement 23 eine radiale Krafteinwirkung K_{R} und eine axiale Krafteinwirkung K_{A} auf den Befestigungsring 10 ausübt, wobei die axiale Krafteinwirkung K_{A} in Richtung des gewickelten Belags 4 gerichtet, wodurch der Endring 10 eine axiale Kraft auf den gewickelten Belag 4 ausübt.

Das als Schraube ausgebildete Befestigungselement 23 hat einen sich in radialer Richtung R der Walze 1 von außen nach innen konisch verjüngenden Kopf, der mit einer am Endring 10 angeordneten und sich ebenfalls in radialer Richtung R der Walze 10 von außen nach innen konisch verjüngenden Wirkfläche 25 in Wirkverbindung steht, wobei die Wirkfläche 25 Teil der Wandung einer den Endring in radialer Richtung R durchsetzenden Bohrung 26 ist.

## Patentansprüche

1. Walze (1), insbesondere für eine Maschine zur Herstellung und/oder Behandlung einer Faserstoffbahn, mit einem Walzenkern (2) mit zylindrischer Mantelfläche (3) und einem gewickelten Belag (4), der aus einem wendelförmig um die Mantelfläche (3) des Kerns (2) gewickelten Profilband (5) gebildet ist, wobei die beiden Enden (7) des Profilbands jeweils durch eine Stirnseite (8) begrenzt sind und der gewickelte Belag (4) zwei axiale Endbereiche (9) hat, die jeweils aus mehreren Windungen (6) des Profilbands (5) gebildet sind und an die sich in axialer Richtung (A-A) der Walze (1) betrachtet jeweils ein am Walzenkern (2) befestigter Endring (10) anschließt, mit jeweils einer Stirnseite (11), die eine Anlageseite (12) bereitstellt, welche zur Anlageseite (12) des gegenüberliegenden Endrings (10) weist und entlang der die unmittelbar an den Endring (10) angrenzende Windung (6a) des jeweiligen Endbereichs (10) des Belags (4) zumindest abschnittweise ihrer Länge nach zur Anlage gebracht ist, **dadurch gekennzeichnet, dass** in zumindest einem axialen Endbereich (9) des gewickelten Belags (4) das Profilband (5) bis zu seinem Ende (7) in Windungen (6, 6a) mit konstanter Steigung gewickelt ist, wobei die unmittelbar an den Endring (10) angrenzende Windung (6a) auf deren gesamten Länge mit der Anlageseite (12) in Kontakt ist und die Stirnseite (11) des Endrings (10) eine schräg, insbesondere quer zur Anlagefläche (12) orientierte Stufe (13) bildet, an der das Ende (7) des Profilbands (5) mit seiner Stirnseite (8) stumpf anstößt.

2. Walze nach Anspruch 1, **dadurch gekennzeichnet, dass** das Profilband (5) ohne Zugspannung um die Mantelfläche (3) des Walzenkerns (2) gewickelt ist.

3. Walze nach Anspruch 1 oder 2, **dadurch gekennzeichnet, dass** bei dem zumindest einen axialen Ende (9) des Belags das Profilband (5) im Bereich seiner unmittelbar an den Endring (10) angrenzenden Windung (6a) mit dem Endring (10) durch einen oder mehrere Haltestift(e) (19) verbunden ist.

4. Walze nach einem der vorangehenden Ansprüche, **dadurch gekennzeichnet, dass** sich die Anlageseite (12) im wesentlichen in Wickelrichtung (W) des Profilbands (5) und in radialer Richtung (R) der Walze (1) erstreckt.

5. Walze nach einem der vorangehenden Ansprüche, **dadurch gekennzeichnet, dass** sich die Stufe (13) im wesentlichen in axialer (A-A) und in radialer (R) Richtung der Walze (1) erstreckt.

6. Walze nach einem der vorangehenden Ansprüche, **dadurch gekennzeichnet, dass** die Stirnseite (11) des Endrings (10) durch die Anlageseite (12) und die Stufe (13) gebildet ist, wobei sich die Anlageseite (12) in Wickelrichtung (W) des Profilbands (5) im Wesentlichen über einen Umlauf erstreckt und der Anfang und das Ende der Anlageseite durch die Stufe (13) miteinander verbunden sind.

7. Walze nach einem der vorangehenden Ansprüche, **dadurch gekennzeichnet, dass** die Höhe der Stufe (13) gleich der Breite des Profilbandes (5) ist.

8. Walze nach , **dadurch gekennzeichnet, dass** zumindest ein Endring (10) im Bereich seiner Stirnseite (11) zumindest abschnittweise mit der Mantelfläche (3) des Walzenkerns (2) verschweißt ist.

9. Walze nach einem der vorangehenden Ansprüche, **dadurch gekennzeichnet, dass** das Profilband (5) in dem zumindest einen axialen Endbereich (9) des Belags (4) zumindest mit der unmittelbar an den Endring (10) angrenzernden Windung (6a) mit der Mantelfläche (3) des Walzenkerns (2) zumindest abschnittweise verschweißt ist.

10. Walze nach einem der vorangehenden Ansprüche, **dadurch gekennzeichnet, dass** das Profilband (5) in beiden Endbereichen des Belags zumindest mit der unmittelbar an den jeweiligen Endring angrenzernden Windung mit der Mantelfläche des Walzenkerns zumindest abschnittweise verschweißt ist.

11. Walze nach einem der vorangehenden Ansprüche, **dadurch gekennzeichnet, dass** das Profilband (5) zwischen seinen beiden Enden (7), insbesondere jede Windung (6, 6a) des Belags (4), mit der Mantelfläche (3) des Walzenkerns (2) zumindest abschnittweise verschweißt ist.

12. Walze nach einem der vorangehenden Ansprüche, **dadurch gekennzeichnet, dass** sich die Verscheißung des Profilbands (5) mit dem Walzenkern (2) im Kontaktbereich zwischen Profilband (5) und Mantelfläche (3) des Walzenkerns (2) unterbrochen oder ununterbrochen erstreckt.

13. Walze nach einem der vorangehenden Ansprüche, **dadurch gekennzeichnet, dass** das Profilband (5) in radialer Richtung (R) der Walze (1) betrachtet einen radial innen liegenden ersten Abschnitt (14) und einen radial außen liegenden die Außenseite (20) des Belags (5) bereitstellenden zweiten Abschnitt (15) hat, wobei die ersten Abschnitte (14) benachtbarter Windungen (6, 6a) miteinander in Kontakt gebracht sind und wobei zwischen zweiten Abschnitten (15) benachbarter Windungen (6, 6a) eine Nut (16) gebildet ist.

14. Walze nach Anspruch 13, **dadurch gekennzeichnet, dass** sich die Nut (16) wendelförmig von dem einen zum anderen axialen Ende des gewickelten Belags (4) erstreckt.
